# FASCICULE DE BREVET EUROPEEN

(11) **EP 2 568 461 B1**
(45) Date de publication et mention de la délivrance du brevet: **04.04.2018**
(21) Numéro de dépôt: 12183907.0
(22) Date de dépôt: 11.09.2012
(51) Int. Cl.: G09B 29/10, G01C 21/20, G08G 1/123

(54) **Procédé de suivi d'entités**
Objektverfolgungsverfahren
Method to track entities

(30) Priorité: 12.09.2011 FR 1102746
(43) Date de publication de la demande: 13.03.2013
(73) Titulaire: Thales, 92200 Neuilly Sur Seine (FR)
(72) Inventeur: Soulie Antoine, 92622 Gennevilliers Cedex (FR)
(74) Mandataire: Lavoix

(56) Documents cités:
- EP-A1- 2 015 275
- WO-A1-95/17685
- WO-A1-2009/068970
- US-A- 6 012 012
- US-A1- 2009 287 402

## Description

La présente invention concerne un procédé de suivi d'entités évoluant dans un espace surveillé représenté par un premier modèle numérisé comportant un ensemble de cartes de différents niveaux de granularité représentant une finesse du suivi demandé, chaque carte étant divisée en zones géographiques de forme prédéterminée, et de taille définie selon le niveau de granularité, le procédé comprenant :
- une étape d'identification des zones géographiques de chaque carte sous la forme d'une adresse complète, de manière à identifier chaque zone géographique de manière unique,
- une étape de définition de zones opérationnelles et d'association à chaque zone opérationnelle d'un niveau de granularité prédéfinie,
- une étape de configuration propre au chargement d'un ensemble de données relatives aux zones géographiques associées aux cartes de différents niveaux de granularité, et aux zones opérationnelles,
- une étape de positionnement de l'entité, afin de déterminer des coordonnées géographiques de l'entité suivie,
- une étape de détermination d'un niveau de granularité à appliquer, en fonction des coordonnées géographiques de l'entité suivie,
- une étape de détermination d'une zone géographique, d'une carte du niveau de granularité déterminé, contenant l'entité,
- une étape de détection d'un changement de zone en fonction des coordonnées géographiques de l'entité suivie, l'entité suivie transitant soit d'une zone géographique d'origine à une zone géographique de destination sans changement de zone opérationnelle, soit d'une zone opérationnelle d'origine à une zone opérationnelle de destination, et
- une étape d'application d'un nouveau niveau de granularité en fonction de la zone opérationnelle de destination, dans le cas d'un changement de zone opérationnelle.

La présente invention concerne également une entité évoluant dans un espace surveillé représenté par un premier modèle numérisé comportant un ensemble de cartes de différents niveaux de granularité représentant une finesse du suivi demandé, chaque carte étant divisée en zones géographiques de forme prédéterminée, et de taille définie selon le niveau de granularité, l'entité comprenant :
- des moyens de sauvegarde propres au chargement d'un ensemble de données relatives aux zones géographiques associées aux cartes de différents niveaux de granularité,
- des moyens de positionnement de l'entité, afin de déterminer des coordonnées géographiques de l'entité suivie, et
- des moyens de détection d'un changement de zone géographique en fonction des coordonnées géographiques de l'entité suivie, l'entité suivie transitant d'une zone géographique d'origine à une zone géographique de destination.

On connaît déjà dans l'état de la technique, notamment d'après EP 2 015 275, un procédé de suivi d'entités similaires à celui défini dans le préambule de la revendication 1.

En particulier, on connaît un procédé de suivi d'entités du type précité, propre à suivre des changements de position d'entités, comme des véhicules, avec une granularité variable. Chaque véhicule suivi évolue dans un espace surveillé divisé en cellules, ou zones géographiques, de tailles prédéterminées selon un niveau de granularité appliqué, et ne reporte l'adresse de sa cellule qu'en cas de changement de cellules. Un premier message comportant l'adresse de la cellule est envoyé via un réseau de communication à un serveur distant qui détermine alors le niveau de granularité en fonction d'une distance vis-à-vis d'un contexte global, consistant par exemple en des positions prédéterminées d'autres véhicules voisins. Le serveur distant envoie ensuite un second message comprenant le niveau de granularité déterminé à l'entité suivie, de manière à informer l'entité suivie du changement de granularité.

L'envoi du premier message à chaque changement de cellule de tous les véhicules suivis vers le serveur distant, ainsi que, en réponse, du second message du serveur distant vers chaque véhicule suivi, émetteur du premier message, nécessite un établissement de communications à chaque fois.

Le problème est que l'établissement de ces communications génère une charge de trafic de données importante dans le cas d'un nombre de véhicules élevés et/ou à mobilité élevé, pouvant provoquer une saturation du réseau de communication utilisé. Ce problème est d'autant plus important que le réseau de communication utilisé a une capacité limitée en termes de débit et de bande passante.

Le but de l'invention est donc de réduire la charge de trafic de données associée aux changements de zones géographiques de véhicules suivis, sur des réseaux de communication à bas débit.

A cet effet, l'invention a pour objet un procédé de suivi selon la revendication 1.

Suivant d'autres modes de réalisation, le procédé de suivi comprend une ou plusieurs des caractéristiques suivantes, prises isolément ou suivant toutes les combinaisons techniquement possibles:
- l'étape de détermination d'un niveau de granularité à appliquer est propre à identifier la zone opérationnelle, afin de déterminer le niveau de granularité à appliquer ;
- il comprend, en outre, une étape de diffusion par une entité suivie à d'autres entités d'un message comprenant une information de zone géographique ;
- l'information de zone géographique comprend soit l'adresse complète de la zone géographique de l'entité, soit une indication de direction ;
- l'adresse complète comprend le niveau de granularité et une identité de la zone géographique ;
- le message comprend, en outre, un identifiant de l'entité suivi, un niveau de fiabilité de réception du message, et soit un nombre de sauts du message à relayer soit une distance de diffusion du message ;
- le message comprend, en outre, un historique des derniers messages de zones géographiques, afin de palier des pertes de messages ;
- la forme de chaque zone géographique est de type hexagonal ;
- les zones opérationnelles sont définies sur un second modèle numérisé de l'espace surveillé, ce second modèle numérisé étant chargé dans l'entité lors de l'étape de configuration.

L'invention a également pour objet une entité selon la revendication 8. Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un espace surveillé comportant des véhicules suivis, avec les modèles numérisés associés,
- la figure 2 est une représentation schématique d'un véhicule suivi selon l'invention,
- la figure 3 est une représentation du suivi d'un véhicule évoluant au travers de différentes zones géographiques, et
- la figure 4 est un organigramme représentant le procédé de suivi selon l'invention.

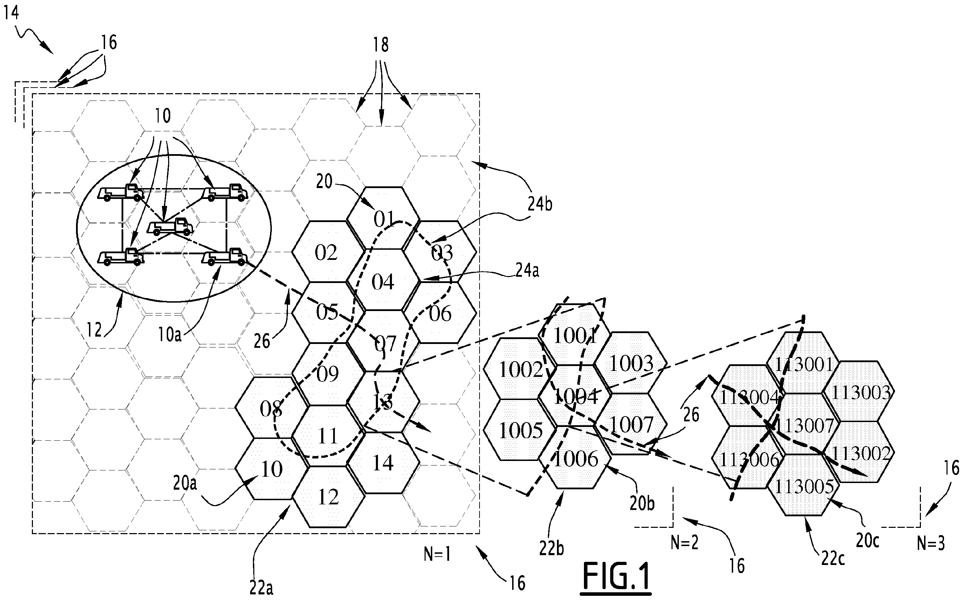

Sur la figure 1, plusieurs véhicules 10, ou entités, mobiles sont représentés sur un terrain d'opération, défini par un responsable opérationnel et correspondant à un espace à surveiller pendant une mission des véhicules 10 sur le terrain d'opération. Les véhicules 10 sont propres à communiquer entre eux des informations, par exemple de position, au travers d'un réseau sans-fil 12, de manière à assurer un suivi mutuel de position.

Le réseau 12 utilise un mode de communication de type ad-hoc, en mode point à point ou point-multipoint, propre à gérer des communications directement entre véhicules 10, sans nécessité d'utiliser une infrastructure externe de communication, comme un serveur distant ou une station de base par exemple.

L'espace surveillé est numérisé, avant la mission, par un opérateur, de manière à obtenir différents modèles de représentation numérique du terrain d'observation, chaque modèle étant ensuite défini suivant des caractéristiques du suivi demandé par le responsable opérationnel, puis mémorisé au sein de chaque véhicule 10.

Un premier modèle numérisé 14, visible sur la figure 1, d'un espace surveillé comporte une pluralité de cartes 16 de différents niveaux de granularité N représentatifs d'une finesse du suivi demandé pour chaque véhicule 10 évoluant au sein de l'espace surveillé.

Chaque carte 16 est divisée en un ensemble de zones géographiques 18 de forme et de localisation prédéterminée. De manière préférée, comme illustrée sur la figure 1, chaque zone géographique 18 a une forme hexagonale. La localisation des zones géographiques 18 de chaque carte 16 correspond, par exemple, à des coordonnées géographiques de type GPS, acronyme de Global Positionning System.

Chaque zone géographique 18 a une taille définie selon la carte 16 utilisée, fonction du niveau de granularité associé. Par exemple, pour un espace surveillé en deux dimensions de forme carrée de 40 Km de côté, un premier niveau de granularité N=1 d'une première carte 16 correspond à une taille de zone géographique 18 de 10 km de côté. Pour un même espace surveillé, un second niveau de granularité N=2 d'une seconde carte 16 correspond à une taille de zone géographique 18 de 5 km de côté.

Chaque zone géographique 18 des différentes cartes 16 a également une adresse complète, de manière à identifier chaque zone géographique 18 de manière unique. De préférence, l'adresse complète comprend le niveau de granularité N et une identité 20 de la zone géographique 18, l'identité 20 étant un nom distinctif par exemple un numéro donné à la zone géographique 18. A titre d'exemple, comme illustrée sur la figure 1 au moyen de trois groupes 22a, 22b, 22c de zones géographiques 18 de niveaux de granularité respectifs N=1, N=2, et N=3, les adresses complètes des zones géographiques 18 correspondantes aux identités 20a, 20b, 20c concernées sont respectivement : (N=1, Id=10), (N=2, Id=1006), et (N=3, Id=113005). Il est à noter que le groupe 22b, respectivement 22c, représente une vue agrandie d'une partie de la carte 16 de niveau N=2, respectivement N=3, en correspondance avec une partie de la carte de niveau N=1, respectivement N=2.

Deux zones opérationnelles 24a, 24b, définies sur un second modèle numérisé, sont visibles en superposition sur le premier modèle numérisé 14. Les zones opérationnelles 24a, 24b permettent de définir des zones pour lesquelles une finesse particulière est demandée, de sorte qu'un niveau de granularité spécifique est associé à chaque zone opérationnelle 24a, 24b. A titre d'exemple, la zone opérationnelle 24a correspond à une zone dangereuse nécessitant un suivi précis des véhicules 10, la zone opérationnelle 24b définie par l'espace en dehors de la zone 24a, correspondant à une zone non dangereuse.

Un trajet 26 est visible sur la figure 1, représentant le parcours d'un véhicule 10a transitant successivement par les zones opérationnelles 24b, 24a, et 24b, représentées en superposition sur la carte 16 de niveau de granularité N=1. Une partie du trajet 26 du véhicule 10a est également visible de manière agrandie sur le groupe 22b, respectivement 22c, de zones géographiques 18, appartenant à la carte 16 de niveau N=2, respectivement N=3.

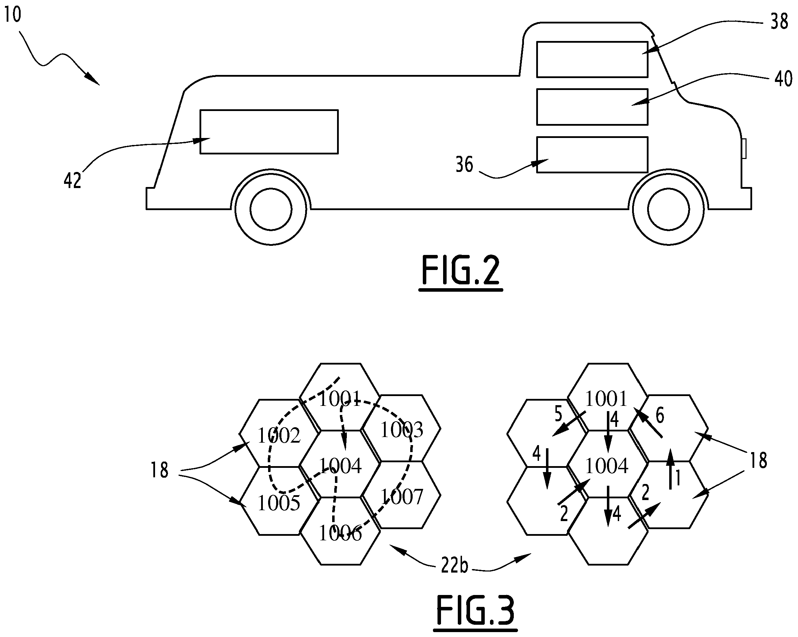

La figure 2 illustre un schéma du véhicule 10 selon l'invention. Le véhicule 10 correspond à tout véhicule terrestre, comme une voiture par exemple, propre à se mouvoir sur une surface. Le véhicule 10, situé à chaque instant dans une zone opérationnelle courante 24a, 24b, et dans une zone géographique courante 18, comprend différents équipements propres à assurer un suivi mutuel, de manière autonome, des positions avec tout ou partie des véhicules 10 du réseau de communication 12.

Le véhicule 10 comprend des moyens de sauvegarde 36 comportant l'ensemble des données relatives aux zones géographiques 18 et aux zones opérationnelles 24a, 24b. De manière plus précise, les moyens de sauvegarde 36 sont propres à la mémorisation du premier modèle numérisé 14 comprenant les zones géographiques 18, et du second modèle numérisé comprenant les zones opérationnelles 24a, 24b. Les moyens de sauvegarde 36 sont propres également au stockage de la dernière position connue, c'est-à-dire de la dernière adresse complète reçue, de tout ou partie des autres véhicules 10, et comprennent, par exemple, une base de données de suivi géographique des zones géographiques 18 de tout ou partie des autres véhicules 10. Enfin, les moyens de sauvegarde 36 permettent un stockage de l'adresse complète du véhicule 10, c'est-à-dire de l'identité 20 de la zone géographique 18 courante et du niveau de granularité de la zone opérationnelle 24a, 24b courante du véhicule 10.

Le véhicule 10 comprend également des moyens de positionnement 38, par exemple un équipement de type GPS et/ou une centrale inertielle, de manière à obtenir les coordonnées géographiques courantes du véhicule 10 au sein de l'espace surveillé. Les moyens de positionnement 38 envoient à une fréquence donnée, par exemple fonction de la vitesse et du niveau de granularité du véhicule 10, les coordonnées géographiques courantes à un calculateur 40.

Le calculateur 40, à partir des coordonnées géographiques courantes du véhicule 10 et des données du second modèle numérisé, est propre à une détermination de la zone opérationnelle 24a, 24b courante et de la finesse du suivi nécessaire, correspondant au niveau de granularité spécifique dans cette zone opérationnelle 24a, 24b.

Le calculateur 40 permet de détecter un changement de zone opérationnelle 24a, 24b, ou un changement de zone géographique 18 sans changement de zone opérationnelle 24a, 24b, ou qu'il n'y a pas eu de changement de zone géographique 18 depuis un certain laps de temps.

En cas de changement de zone opérationnelle courante 24a, 24b, d'une zone opérationnelle d'origine vers une zone opérationnelle de destination, le calculateur 40 est propre à une détermination de l'adresse complète, c'est-à-dire du niveau de granularité et de l'identité 20 de la zone géographique 18 de destination, en utilisant la carte 16 correspondante au niveau de granularité associé à la zone opérationnelle 24a, 24b de destination.

Le calculateur 40 permet une création de messages comprenant une information de zone géographique 18, destinée à informer, à l'aide de moyens de radiocommunication 42, tout ou partie des véhicules 10 du réseau de communication 12 de la position du véhicule 10. L'information de zone géographique comprend soit l'adresse complète de la zone géographique 18 du véhicule 10, soit une indication de direction. Le message comprend également un identifiant du véhicule 10 suivi, émetteur du message, afin de permettre aux autres véhicules 10, récepteurs du message, de mettre à jour leur base de données de suivi géographique en associant l'identifiant et la position, c'est-à-dire l'adresse complète de la zone géographique 18, du véhicule 10 émetteur.

Au sein d'un véhicule 10, considéré en tant qu'entité réceptrice, le calculateur 40 est propre à décoder chaque message reçu afin de retrouver l'identifiant du véhicule 10 émetteur et soit l'adresse complète de sa zone géographique 18 soit son changement de direction. Dans le cas d'une réception d'un changement de direction, le calculateur 40 est propre à extraire de la base de données de suivi géographique la dernière zone géographique 18 connue du véhicule 10, puis détermine, à partir du changement de direction, sa nouvelle position, c'est à dire l'adresse complète de la dernière zone géographique 18 du véhicule 10 émetteur. Ensuite, le calculateur 40 met à jour sa base de données géographique avec cette adresse complète correspondante à la dernière position connue du véhicule 10 émetteur.

De préférence, le message comprend, en outre, un niveau de fiabilité de réception du message, et/ou soit un nombre de sauts du message à relayer soit une distance de diffusion du message. Le niveau de fiabilité de réception du message est, par exemple, une demande d'acquittement du message reçu de la part du véhicule 10 récepteur, de manière à informer le véhicule 10 émetteur de la réception correcte du message. Le nombre de sauts du message à relayer dépend du nombre de véhicules 10 du réseau de communication 12 que le véhicule 10 émetteur souhaite informer. Par exemple, pour un nombre de sauts égale à un, seules les véhicules 10 voisins accessibles directement, au travers d'un seul lien radio, sont destinataires du message. Pour un nombre de sauts égal à deux, les véhicules 10 voisins accessibles directement relaient, en outre, le message à d'autres véhicules 10 accessibles directement pour eux. La distance de diffusion, quant à elle, correspond, par exemple, à un rayon maximum de diffusion du message depuis le véhicule 10 émetteur.

De manière préférée, le message comprend un historique des derniers messages de zones géographiques, de manière à palier des pertes de messages. De manière plus précise, le message comprend les informations d'indication de direction précédemment envoyées et un nombre de messages déjà envoyés depuis le dernier envoi d'un message contenant une adresse complète.

Les moyens de radiocommunication 42 sont propres, de manière générale, à une émission/réception d'informations, en mode Ad-hoc, vers tout ou partie des autres véhicules 10 du réseau de communication 12. Plus précisément, les moyens de radiocommunication 42 permettent une diffusion des messages vers, au moins, les véhicules 10 voisins et une réception des messages issus, au moins, des véhicules 10 voisins.

La figure 3 illustre une manière de coder l'information de direction présente dans les messages diffusés lors de changements de zones géographiques 18 d'un véhicule 10, au sein d'une même zone opérationnelle.

Sur le groupe 22b de zones géographiques 18, situé à gauche, est visible un trajet du véhicule 10 transitant au travers de différentes zones géographiques 18, d'identités 20 respectives Id=1001, Id=1002, Id=1005, Id=1004, Id=1006, Id=1007, Id=1003, Id=1001, et Id=1004.

Sur le groupe 22b situé à droite est visible l'information de direction correspondante au trajet du véhicule 10 visualisé sur le groupe 22b de gauche. La forme utilisée de la zone géographique 18 étant de type hexagonal, seules six directions différentes sont possibles pour passer d'une zone géographique 18 à une autre, de sorte que seuls trois bits sont nécessaires au codage de l'information de direction. A titre d'exemple, on effectue une correspondance directe entre une valeur numérique d'information de direction et une direction géographique telle que : un corresponde à une direction Nord, deux corresponde à une direction Nord-est, et ainsi de suite.

Ainsi, sur l'exemple de la figure 3, à chaque changement de zone géographique 18 du véhicule 10 suivi, les informations de direction sont successivement : 5, 4, 2, 4, 2, 1, 6, et 4.

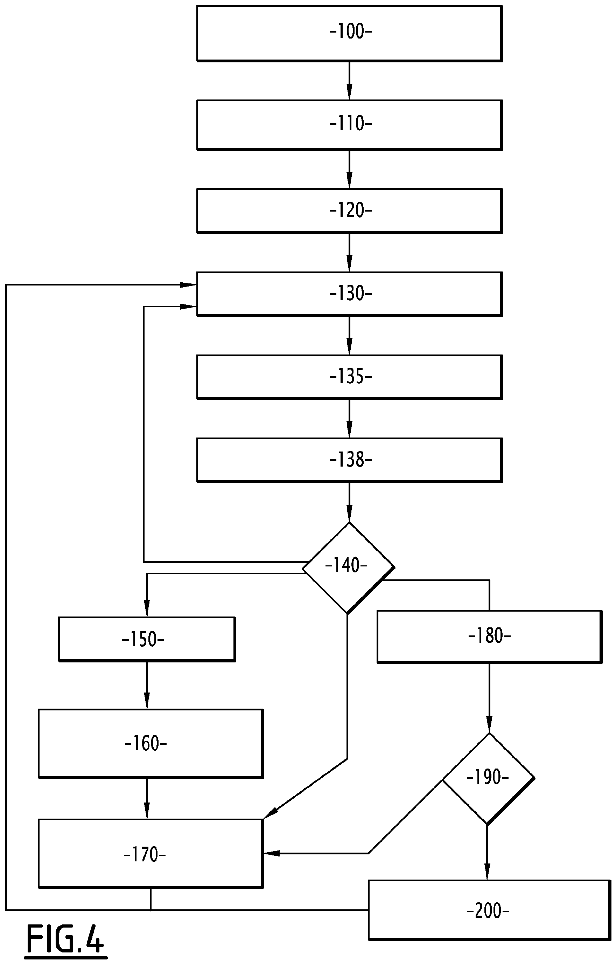

Le procédé de suivi de véhicules 10 selon l'invention va être à présent décrit en regard de la figure 4.

Préalablement à la mission, lors d'une étape 100, à partir du premier modèle numérisé 14 comportant plusieurs cartes 16 de différents niveaux de granularité, chaque zone géographique 18 de chaque carte 16 est identifiée par une adresse complète, puis l'ensemble des adresses complètes est ajouté au premier modèle numérisé 14. En variante, le modèle numérisé 14 comprend un algorithme de calcul des adresses complètes.

A l'issue de cette étape de détermination ou en parallèle, lors d'une étape 110, différentes zones opérationnelles 24a, 24b sont définies, par l'opérateur, au moyen de leurs coordonnées géographiques au sein du second modèle numérisé de l'espace surveillé. Puis, chaque zone opérationnelle 24a, 24b est définie avec un niveau de granularité spécifique, fonction de la finesse requise pour le suivi dans chaque zone opérationnelle 24a, 24b.

Ensuite, lors d'une étape 120 de configuration, chaque véhicule 10 appartenant au réseau de communication 12 est chargé avec l'ensemble des données relatives aux zones géographiques 18 et aux zones opérationnelles 24a, 24b. De manière plus précise, les moyens de sauvegarde 36 de chaque véhicule 10 sont chargés avec le premier et le second modèle numérisé, soit à distance soit de manière locale, au moyen par exemple d'une clé USB, de l'anglais Universal Serial Bus.

Au cours de la mission, lors d'une étape 130, les moyens de positionnement 38 déterminent les coordonnées géographiques courantes du véhicule suivi 10, à l'aide de l'équipement GPS et/ou de la centrale inertielle, puis envoient, de manière régulière, ces coordonnées au calculateur 40.

Lors d'une étape 135, sur réception des coordonnées du véhicule suivi 10, le calculateur 40 détermine à la fois la zone opérationnelle 24a, 24b courante à l'aide du second modèle numérisé, et le niveau de granularité associé. Une fois le niveau de granularité déterminé, le calculateur 40 détermine la carte 16 à utiliser dans le premier modèle numérisé 14.

Lors d'une étape 138, le calculateur 40 détermine la zone géographique 18 courante, de la carte 16 du niveau de granularité déterminé, contenant le véhicule 10.

Lors d'une étape 140, le calculateur 40 détecte un changement de zone, opérationnelle et/ou géographique en comparant le niveau de granularité déterminé au niveau de granularité appliqué. En cas d'égalité, le calculateur 40 détermine si l'identité 20 de la zone géographique 18 courante du véhicule 14 a changé.

Dans le cas où il n'y a ni changement de zone opérationnelle 24a, 24b, ni changement de zone géographique 18, le calculateur 40 vérifie si un délai de changement de zone est inférieur à un seuil prédéterminé de délai maximum et le procédé retourne à l'étape 130.

Dans le cas où le calculateur 40 détermine un changement de zone opérationnelle 24a, 24b, lors d'une étape 150, le calculateur 40 applique le nouveau niveau de granularité déterminé. Ensuite, lors d'une étape 160, le calculateur 40 détermine l'adresse complète de la zone géographique 18 courante, à partir de l'identité 20 de la zone géographique 18 du véhicule 10 et du niveau de granularité spécifique de la zone opérationnelle 24a, 24b courante, et envoie l'adresse complète déterminée aux moyens de sauvegarde 36. Puis, au cours d'une étape 170, le calculateur 40 crée un message comprenant l'adresse complète de la zone géographique 18 courante, et l'identifiant du véhicule 10 émetteur du message. Ensuite, le calculateur 40 envoie le message crée aux moyens de radiocommunication 42, qui le diffusent à tout ou partie des véhicules 10 du réseau de communication 12. A l'issue de l'étape 170, le procédé retourne à l'étape 130 de positionnement.

En prenant l'exemple du trajet 26 du véhicule 10a visible sur la figure 1, juste avant son transit de la zone opérationnelle 24a vers la zone opérationnelle 24b, le véhicule 10a se situe à l'adresse complète (N=2, Id=1004), dans le cas où le niveau de granularité associé à la zone opérationnelle 24a d'origine est N=2. Après sa sortie de la zone opérationnelle 24a, le véhicule 10a émet un message à tout ou partie des véhicules 10 comprenant l'adresse complète de sa zone géographique 18 courante, à savoir : (N=1, Id=13).

Dans le cas où le délai de changement de zone est supérieur au seuil prédéterminé de délai maximum, le procédé passe de l'étape 140 à l'étape 170.

Dans le cas où le calculateur 40 détermine un changement d'une zone géographique 18 à une autre sans changement de zone opérationnelle 24a, 24b, lors d'une étape 180, le calculateur 40 identifie l'adresse complète de la zone géographique 18 courante et envoie l'adresse complète identifiée aux moyens de sauvegarde 36. Ensuite, durant une étape 190, le calculateur 40 calcule le nombre de messages envoyés avec indication de direction et la durée, depuis le dernier changement de zone avec diffusion d'une adresse complète.

Si le nombre de messages envoyés avec indication de direction est inférieur à une limite déterminée, le calculateur 40, lors d'une étape 200, crée un message comprenant l'information de direction, et l'identifiant du véhicule 10 émetteur du message. Ensuite, le calculateur 40 envoie le message crée aux moyens de radiocommunication 42, qui le diffusent à tout ou partie des véhicules 10 du réseau de communication 12. A l'issue de l'étape 200, le procédé retourne à l'étape 130 de positionnement.

A titre d'exemple, en reprenant l'exemple du trajet 26 du véhicule 10a visible sur la figure 1, lorsque le véhicule 10a circule dans la zone opérationnelle 24a de niveau de granularité N=2, juste avant sa sortie de cette zone opérationnelle 24a, le véhicule 10a transite successivement dans les zones géographiques 18 d'adresses complètes respectives: (N=2, Id=1001), (N=2, Id=1002), (N=2, Id=1004). Il émet ainsi successivement deux messages comprenant respectivement les indications de direction 5, et 3.

Si le nombre de messages envoyés avec indication de direction est supérieur à la limite déterminée, le procédé passe de l'étape 190 à l'étape 170 de création et de diffusion d'un message comprenant l'adresse complète de la zone géographique 18 courante.

Ainsi, le procédé selon l'invention permet à chaque véhicule 10 du réseau de communication 12 de déterminer sa zone opérationnelle, son niveau de granularité et son changement éventuel de zone opérationnelle et/ou de zone géographique, de manière autonome, sans communication avec un serveur centralisé distant.

De plus, les messages de position ne sont diffusés essentiellement qu'en cas de changement de zone, et, dans le cas d'un changement de zone géographique au sein d'une même zone opérationnelle, seule une information de zone géographique de taille réduite est transmise aux autres véhicules 10.

Par conséquent, la charge de données circulant dans le réseau de communication est optimisée, et le procédé selon l'invention est ainsi particulièrement adapté à des réseaux de communication très contraints, c'est-à-dire de très faible débit.

Il devra être également compris que les exemples de réalisation présentés ci-dessus ne sont pas limitatifs. On conçoit notamment que l'espace surveillé peut être de topologie variable, incluant une dimension spatiale par exemple. On conçoit également que l'invention s'applique à tous types d'entités, comme par exemple des aéronefs.

## Revendications

1. Procédé de suivi d'entités (10) évoluant dans un espace surveillé représenté par un premier modèle numérisé (14) comportant un ensemble de cartes (16) de différents niveaux de granularité représentant une finesse du suivi demandé, chaque carte (16) étant divisée en zones géographiques (18) de forme prédéterminée, et de taille définie selon le niveau de granularité, le procédé comprenant :
- une étape (100) d'identification des zones géographiques (18) de chaque carte (16) sous la forme d'une adresse complète, de manière à identifier chaque zone géographique (18) de manière unique,
- une étape (110) de définition de zones opérationnelles (24a, 24b) et d'association à chaque zone opérationnelle (24a, 24b) d'un niveau de granularité prédéfinie,
- une étape (120) de configuration propre au chargement d'un ensemble de données relatives aux zones géographiques (18) associées aux cartes (16) de différents niveaux de granularité, et aux zones opérationnelles (24a, 24b),
- une étape (130) de positionnement de l'entité (10), afin de déterminer des coordonnées géographiques de l'entité (10) suivie,
- une étape (135) de détermination d'un niveau de granularité à appliquer, en fonction des coordonnées géographiques de l'entité (10) suivie,
- une étape (138) de détermination d'une zone géographique (18), d'une carte (16) du niveau de granularité déterminé, contenant l'entité (10),
- une étape (140) de détection d'un changement de zone en fonction des coordonnées géographiques de l'entité (10) suivie, l'entité (10) suivie transitant soit d'une zone géographique (18) d'origine à une zone géographique (18) de destination sans changement de zone opérationnelle (24a, 24b), soit d'une zone opérationnelle (24a, 24b) d'origine à une zone opérationnelle (24a, 24b) de destination, et
- une étape (150) d'application d'un nouveau niveau de granularité en fonction de la zone opérationnelle (24a, 24b) de destination, dans le cas d'un changement de zone opérationnelle (24a, 24b),
**caractérisé en ce que** :
- les étapes (135, 138) de détermination, l'étape (140) de détection, et l'étape (150) d'application sont réalisées au sein de chaque entité (10), de manière autonome, sans communications extérieures,
- le procédé comporte une étape de diffusion par une entité (10) suivie à d'autres entités (10) d'un message comprenant une information de zone géographique (18), ladite information de zone géographique comprenant une indication de direction.

2. Procédé selon la revendication 1, **caractérisé en ce que** l'étape (135) de détermination d'un niveau de granularité à appliquer est propre à identifier la zone opérationnelle (24a, 24b), afin de déterminer le niveau de granularité à appliquer.

3. Procédé selon l'une quelconque des revendications précédentes, **caractérisé en ce que** l'adresse complète comprend le niveau de granularité et une identité (20) de la zone géographique (18).

4. Procédé selon l'une quelconque des revendications précédentes, **caractérisé en ce que** le message comprend, en outre, un identifiant de l'entité (10) suivi, un niveau de fiabilité de réception du message, et soit un nombre de sauts du message à relayer soit une distance de diffusion du message.

5. Procédé selon l'une quelconque des revendications précédentes, **caractérisé en ce que** le message comprend, en outre, un historique des derniers messages de zones géographiques (18), afin de palier des pertes de messages.

6. Procédé selon l'une quelconque des revendications précédentes, **caractérisé en ce que** la forme de chaque zone géographique (18) est de type hexagonal.

7. Procédé selon l'une quelconque des revendications précédentes, **caractérisé en ce que** les zones opérationnelles (24a, 24b) sont définies sur un second modèle numérisé de l'espace surveillé, ce second modèle numérisé étant chargé dans l'entité (10) lors de l'étape (120) de configuration.

8. Entité (10) évoluant dans un espace surveillé représenté par un premier modèle numérisé (10) comportant un ensemble de cartes (16) de différents niveaux de granularité représentant une finesse du suivi demandé, chaque carte (16) étant divisée en zones géographiques (18) de forme prédéterminée, et de taille définie selon le niveau de granularité, l'entité (10) comprenant :
- des moyens de sauvegarde (36) propres au chargement d'un ensemble de données relatives aux zones géographiques (18) associées aux cartes (16) de différents niveaux de granularité,
- des moyens de positionnement (38) de l'entité (10), afin de déterminer des coordonnées géographiques de l'entité (10) suivie, et
- des moyens (40) de détection d'un changement de zone géographique (18) en fonction des coordonnées géographiques de l'entité (10) suivie, l'entité (10) suivie transitant d'une zone géographique (18) d'origine à une zone géographique (18) de destination,
**caractérisé en ce que** :
- les moyens de sauvegarde (36) comprennent un ensemble de données relatives à des zones opérationnelles (24a, 24b) comportant un niveau de granularité prédéfinie,
- les moyens de détection (40) sont propres à détecter de manière autonome un changement de zone opérationnelle (24a, 24b), l'entité (10) suivie transitant d'une zone opérationnelle (24a, 24b) d'origine à une zone opérationnelle (24a, 24b) de destination,
- l'entité (10) comprend des moyens de détermination (40), de manière autonome, d'un niveau de granularité à appliquer à partir de la zone opérationnelle (24a, 24b) d'origine, et d'un nouveau niveau de granularité en fonction de la zone opérationnelle (24a, 24b) de destination, dans le cas d'un changement de zone opérationnelle (24a, 24b),
- l'entité comporte des moyens de diffusion d'un message comprenant une information de zone géographique (18), ladite information de zone géographique comprenant une indication de direction.

## Patentansprüche

1. Verfahren zum Nachverfolgen von Entitäten (10), die sich in einem überwachten Raum bewegen, der durch ein erstes digitalisiertes Modell repräsentiert ist (14), welches eine Menge an Karten (16) unterschiedlicher Granularität-Niveaus aufweist, die eine gewünschte Nachverfolge-Feinheit repräsentieren, wobei jede Karte (16) unterteilt ist in geografische Bereiche (18) von vorbestimmter Form und von einer Größe, die definiert ist gemäß dem Granularität-Niveau, wobei das Verfahren aufweist:
- einen Schritt (100) der Identifikation der geografischen Bereiche (18) jeder Karte (16) in der Form einer kompletten Adresse, um jeden geografischen Bereich (18) eindeutig zu identifizieren,
- einen Schritt (110) der Definition operationeller Bereiche (24a, 24b) und der Zuordnung eines vordefinierten Granularität-Niveaus zu jedem operationellen Bereich (24a, 24b),
- einen Schritt (120) der Konfiguration, imstande zum Laden eines Satzes von Daten bezüglich der geografischen Bereiche (18), die den Karten (16) unterschiedlicher Granularität-Niveaus zugeordnet sind, und der operationellen Bereiche (24a, 24b),
- einen Schritt (130) der Positionsbestimmung der Entität (10), um die geografischen Koordinaten der nachverfolgten Entität (10) zu ermitteln,
- einen Schritt (135) der Ermittlung eines anzuwendenden Granularität-Niveaus in Abhängigkeit von den geografischen Daten der nachverfolgten Entität (10),
- einen Schritt (138) der Ermittlung eines geografischen Bereichs (18) einer Karte (16) des ermittelten Granularität-Niveaus, der die Entität (10) enthält,
- einen Schritt (140) der Detektion einer Änderung des Bereichs in Abhängigkeit von den geografischen Koordinaten der nachverfolgten Entität (10), wobei die nachverfolgte Entität (10) entweder von einem ursprünglichen, geografischen Bereich (18) zu einem geografischen Ziel-Bereich (18) übergeht ohne Änderung des operationellen Bereichs (24a, 24b) oder von einem ursprünglichen, operationellen Bereich (24a, 24b) zu einem operationellen Ziel-Bereich (24a, 24b) übergeht, und
- einen Schritt (150) der Anwendung eines neuen Granularität-Niveaus in Abhängigkeit von dem operationellen Ziel-Bereich (24a, 24b) in dem Falle einer Änderung des operationellen Bereichs (24a, 24b),
**dadurch gekennzeichnet, dass**
- die Schritte (135, 138) der Ermittlung, der Schritt (140) der Detektion und der Schritt (150) der Anwendung für jede Entität (10) realisiert werden in autonomer Weise ohne äußere Kommunikationen,
- das Verfahren aufweist einen Schritt der Übertragung durch eine nachverfolgte Entität (10) an andere Entitäten (10) einer Nachricht, die eine Information des geografischen Bereichs (18) enthält, welche Information des geografischen Bereichs (18) eine Richtungsangabe aufweist.

2. Verfahren gemäß Anspruch 1, **dadurch gekennzeichnet, dass** der Schritt (135) der Ermittlung eines anzuwendenden Granularität-Niveaus imstand ist, den operationellen Bereich (24a, 24b) zu identifizieren, um das anzuwendende Granularität-Niveau zu ermitteln.

3. Verfahren gemäß irgendeinem der vorhergehenden Ansprüche, **dadurch gekennzeichnet, dass** die komplette Adresse das Granularität-Niveau und eine Identität (20) des geografischen Bereichs (18) aufweist.

4. Verfahren gemäß irgendeinem der vorhergehenden Ansprüche, **dadurch gekennzeichnet, dass** die Nachricht ferner aufweist eine Identifizierung der nachverfolgten Entität (10), ein Niveau der Verlässlichkeit des Erhalts der Nachricht und entweder eine Anzahl von Sprüngen der weiterzuleitenden Nachricht oder eine Distanz der Übertragung der Nachricht,

5. Verfahren gemäß irgendeinem der vorhergehenden Ansprüche, **dadurch gekennzeichnet, dass** die Nachricht ferner aufweist eine Historie der letzten Nachrichten der geografischen Bereiche (18), um Verluste an Nachrichten zu vermeiden.

6. Verfahren gemäß irgendeinem der vorhergehenden Ansprüche, **dadurch gekennzeichnet, dass** die Form jedes geografischen Bereichs (18) vom hexagonalen Typ ist.

7. Verfahren gemäß irgendeinem der vorhergehenden Ansprüche, **dadurch gekennzeichnet, dass** die operationellen Bereiche (24a, 24b) über ein zweites digitalisiertes Modell des überwachten Raums definiert werden, wobei dieses zweite digitalisierte Modell während des Schritts (120) der Konfiguration in die Entität (10) geladen wird.

8. Entität (10), die sich in einem überwachten Raum bewegt, der durch ein erstes digitalisiertes Modell (10) repräsentiert ist, das eine Menge an Karten (16) unterschiedlicher Granularität-Niveaus aufweist, die eine gewünschte Nachverfolge-Feinheit repräsentieren, wobei jede Karte (16) unterteilt ist in geografische Bereiche (18) von vorbestimmter Form und von einer Größe, die definiert ist gemäß dem Granularität-Niveau, wobei die Entität (10) aufweist:
- Sicherungsmittel (36), die imstande sind zum Laden eines Satzes von Daten bezüglich der geografischen Bereiche (18), die den Karten (16) unterschiedlicher Granularität-Niveaus zugeordnet sind,
- Mittel zur Positionsbestimmung (38) der Entität (10), um die geografischen Koordinaten der nachverfolgten Entität (10) zu ermitteln, und
- Mittel (40) zur Detektion einer Änderung des geografischen Bereichs (18) in Abhängigkeit von den geografischen Koordinaten der nachverfolgten Entität (10), wobei die nachverfolgte Entität (10) von einem ursprünglichen, geografischen Bereich (18) zu einem geografischen Ziel-Bereich (18) übergeht,
**dadurch gekennzeichnet, dass**
- die Sicherungsmittel (36) aufweisen einen Satz von Daten bezüglich operationeller Bereiche (24a, 24b), die ein vordefiniertes Granularität-Niveau aufweisen,
- die Mittel zur Detektion (40) imstande sind, in autonomer Weise eine Änderung des operationellen Bereichs (24a, 24b) zu detektieren, wobei die Detektion einer Bereichsänderung in Abhängigkeit von den geografischen Koordinaten der nachverfolgten Entität (10), wobei die nachverfolgte Entität (10) von einem ursprünglichen, operationellen Bereich (24a, 24b) zu einem operationellen Ziel-Bereich (24a, 24b) übergeht,
- die Entität (10) aufweist Mittel zur Ermittlung (40), in autonomer Weise, eines anzuwendenden Granularität-Niveaus ausgehend von dem ursprünglichen, operationellen Bereich (24a, 24b) und eines neuen Granularität-Niveaus in Abhängigkeit von dem operationellen Ziel-Bereich (24a, 24b) in dem Fall einer Änderung des operationellen Bereichs (24a, 24b),
- die Entität aufweist Mittel zur Übertragung einer Nachricht, die eine Information des geografischen Bereichs (18) aufweist, wobei die Information des geografischen Bereichs eine Richtungsangabe aufweist.

## Claims

1. A method for monitoring entities (10) moving in a monitored space represented by a first digital model (14) comprising a set of maps (16) with different levels of granularity representing a fineness of the requested monitoring, each map (16) being divided into geographical zones (18) of a predetermined shape, and having a size defined according to the level of granularity, the method including:
- an identification step (100) for identifying geographical zones (18) of each map (16) in the form of a complete address, so as to identify each geographical zone (18) uniquely,
- a definition step (110) for defining operational zones (24a, 24b) and associating each operational zone (24a, 24b) with a predefined level of granularity,
- a configuration step (120) for loading a set of data relative to the geographical zones (18) associated with the maps (16) of different levels of granularity, and with the operational zones (24a, 24b),
- a positioning step (130) for positioning the entity (10), so as to determine the geographical coordinates of the monitored entity (10),
- a determination step (135) for determining a level of granularity to be applied, as a function of the geographical coordinates of the monitored entity (10),
- a determination step (138) for determining a geographical zone (18), from a map (16) with the predetermined level of granularity, containing the entity (10),
- a detection step (140) for detecting a change of zone as a function of the geographical coordinates of the monitored entity (10), the monitored entity (10) either going from an original geographical zone (18) to a destination geographical zone (18) without changing operational zones (24a, 24b), or from an original operational zone (24a, 24b) to a destination operational zone (24a, 24b), and
- an application step (150) for applying a new level of granularity as a function of the operational destination zone (24a, 24b), in the case of a change of operational zone (24a, 24b),
**characterized in that**:
- the determination steps (135, 138), the detection step (140), and the application step (150) are carried out within each entity (10), independently, without outside communications,
- the method comprises a broadcasting step for broadcasting by a monitored entity (10) to other entities (10) of a message including geographical zone information (18), the geographical zone information including a direction indication.

2. The method according to claim 1, wherein the determination step (135) for determining a level of granularity to be applied is able to identifying the operational zone (24a, 24b), so as to determine the level of granularity to be applied.

3. The method according to any of preceding claims, wherein the complete address includes the level of granularity and an identity (20) of the geographical zones (18).

4. The method according to any of preceding claims, wherein the message also includes an identifier for the monitored entity (10), a reception reliability level of the message, and either a number of hops of the message to be relayed or a broadcast distance of the message.

5. The method according to any of preceding claims, wherein the message also includes a log of the last geographical zone (18) messages, in order to overcome message losses.

6. The method according to any of preceding claims, wherein the shape of each geographical zone (18) is hexagonal.

7. The method according to any of preceding claims, wherein the operational zones (24a, 24b) are defined on the second digital model of the monitored space, said second digital model being loaded into the entity (10) during the configuration step (120).

8. An entity (10) moving in the monitored space represented by a first digital model (10) comprising a set of maps (16) of different levels of granularity representing a requested fineness of the monitoring, each map being divided into geographical zones (18) of a predetermined shape, and having a size defined according to the level of granularity, the entity (10) including:
- saving means (36) for loading a set of data relative to the geographical zones (18) associated with the maps (16) of different levels of granularity,
- positioning means (38) for positioning the entity (10), so as to determine the geographical coordinates of the monitored entity (10), and
- detecting means (40) for detecting a change of geographical zone (18) as a function of the geographical coordinates of the monitored entity (10), the monitored entity (10) going from an original geographical zone (18) to a destination geographical zone (18),
**characterized in that**:
- the saving means (36) include a data set relative to operational zones (24a, 24b) comprising a predefined level of granularity,
- the detecting means (40) are capable of independently detecting a change of operational zone (24a, 24b), the monitored entity (10) going from an original operational zone (24a, 24b) to a destination operational zone (24a, 24b),
- the entity (10) includes determining means (40) for independently determining a level of granularity to be applied from the original operational zone (24a, 24b), and a new level of granularity as a function of the destination operational zone (24a, 24b), in the case of a change of operational zone (24a, 24b),
- the entity comprises broadcasting means for broadcasting a message including geographical zone information (18), the geographical zone information including a direction indication.
